# EUROPEAN PATENT SPECIFICATION

(11) **EP 0 465 999 B1**
(45) Date of publication and mention of the grant of the patent: **12.04.1995**
(21) Application number: 91110966.8
(22) Date of filing: 02.07.1991
(51) Int. Cl.: B60C 11/11

(54) **A tyre with inclined elastic support blocks on its outer surface**
Reifen mit geneigten, elastischen Stützblöcken an seiner äusseren Oberfläche
Bandage avec blocs de support élastiques inclinés sur sa surface extérieure

(30) Priority: 07.07.1990 CN 90103275
(43) Date of publication of application: 15.01.1992
(73) Proprietor: Li, Shisheng, Beijing 100081 (CN)
(72) Inventor: Li, Shisheng, Beijing 100081 (CN)
(74) Representative: Finck, Dieter, Dr.Ing.

(56) References cited:
- DE-A- 2 307 499
- DE-B- 1 098 386
- US-A- 2 891 594

## Description

The invention relates to a tyre comprising elastic convex blocks, which are uniformly arranged on and integrated with the outer surface of the tyre, wherein each convex block is inclined towards the opposite direction of the linear velocity direction of the tyre surface where the convex block is situated with an acute angel (α) between the center line of the convex block and the linear velocity direction where the convex block is situated such that each convex block is directed against the rotation direction of the tyre.

Such tyres are used on wheeled transport machinery, particularly as tyres of various automobiles, not only as a cover tyre of a pneumatic tyre with a tyre tube, but also as a nonpneumatic tyre without tyre tube.

On the tyre surface of the traditional various tyres some figured convex blocks are arranged. Said figured convex blocks extend along the radial direction of the tyre everywhere on the tyre surface to form convex blocks with various shapes, so as to form antiskid figures on the tyre surface of the tyre. Said figured convex blocks of the tyre are all perpendicular to the tangent line of the tyre surface where a corresponding convex block is situated. This type of radial figures have been widely used, but they have the disadvantages that the braking distance is long, that the starting of the vehicle requires a larger moment because, to make the vehicle start to move, the starting moment applied on the driving wheel is used not only to overcome the starting inertia, but also to overcome the rolling resistance moment of the tyre, and the right figures extending radially of the traditional tyre do not contribute to overcoming the rolling resistance moment, and that the riding comfortability is worse.

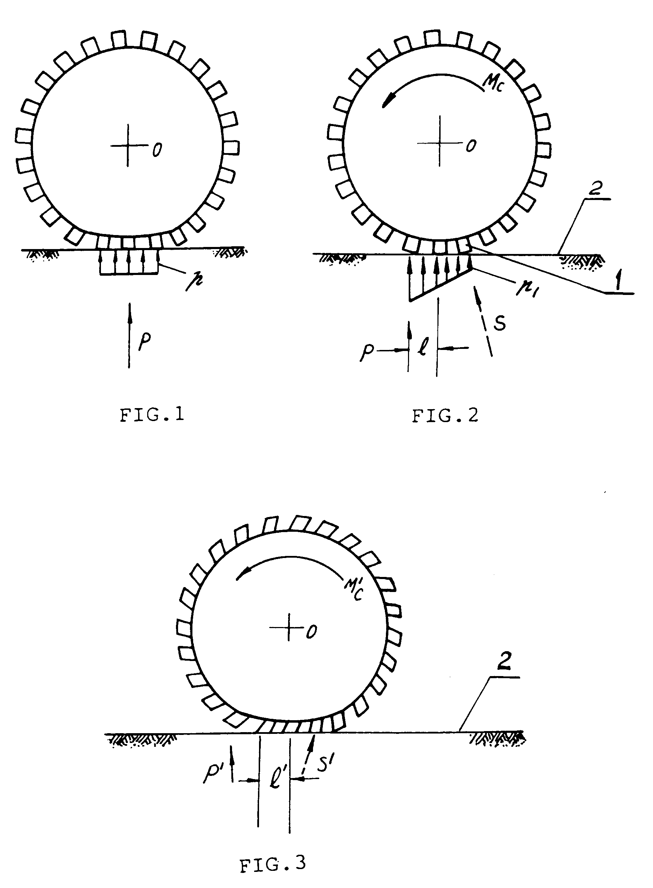

On the traditional tyre, the figured convex blocks all extend radially, as shown in Fig. 1 and Fig. 2. When the vehicle is in a static state, the tyre is contacted with the road surface, the reacting force formed by the gravitational force between the tyre and the road surface is uniformly distributed, as shown at p in Fig. 1, and the resultant force P directs towards the center O of the tyre. When a starting moment Mc is applied on the driving wheel, the reacting force between the tyre and the road surface would change, i.e. the reacting force on the front portion of the contact area is greater than that on the back portion of the contact area, and therefore the resultant force of said reacting force moves ahead so as not to direct towards the center O of the tyre, so a rolling resistance moment Mr is formed ( $\text{Mr = P*l}$ , l is the distance between the center O of the tyre and the direction line of the resultant force of the reacting forces between the tyre and the road surface when the vehicle starts to move). Only when the starting moment Mc is greater than the rolling resistance moment Mr, the wheel is able to roll. During the starting process of the vehicle, the figured convex block 1 on the back portion of the convex area would rehabilitate by means of elastic force because the reacting force between said figured convex block 1 and the road surface reduces, and the elastic rehabilitating force of said convex block is acted on the road surface, and at the same time, the road surface has a reacting force S acted on said convex block. Because the figured convex block of the traditional tyre extends radially, the elastic rehabilitating force of said convex block is also radial, and the reacting force of the road surface to said convex block is also radial and directs towards the center O of the tyre, so the elastic rehabilitating force of the figured convex block does not contribute to the rotation of the wheel of the vehicle.

US-A-2 891 594 describes a rubber tyre of the generic kind for vehicles wherein the area of contact between the lugs forming the tread of the tyre and the ground is increased, for a given amount of rubber. The lugs have a generally rhomboidal radial cross section so as to provide parallel side walls which form an acute angel with the circumference of the tyre away from the direction of the rotation thereof.

The object of the invention is to propose a tyre of the generic kind which improves the braking performance of the vehicle, shortens the braking distance, improves riding comfortability and reduces the starting moment used to make the vehicle start to move.

This object is achieved by several parallel arranged elastically deformable ring arbors, each ring arbor comprising a ring arbor body and branches which are arranged on and integrated with the outer circumference surface of the ring arbor body and which have an inclination direction, an inclination angle, an arrangement interval and a number that corresponds to that of the convex blocks, wherein the ring arbor body and their branches are embedded in the tyre such that each branch is embedded in a convex block along the center line thereof.

The tyre according to the invention has inclined elastic support blocks on its outer surface, wherein some elastic support convex blocks are uniformly distributed on and integrated with the outer tyre circumference surface of said tyre, said convex blocks direct against the rotation direction of the tyre, i.e. incline towards the opposite direction of the linear velocity direction of the outer tyre surface of the tyre. The angle between the center line of said convex block and the linear velocity direction of the tyre surface where said convex block is situated is an acute angle of 30° to 80°.

The cross section of said convex block is a rectangle, and its vertical section is basically a rectangle, but on the top of said convex block there is a flange extended along the local linear velocity direction.

Regarding the pneumatic tyre, the extension length of the convex block is about 1/40 to 1/10 of the radius of the tyre. Regarding the non-pneumatic tyre, the extension length of the convex block is about 1/40 to 1/5 of the radius of the tyre.

In each said convex block there is a branch of a ring arbor made of elastic metal or elastic non-metal, e.g. plastics. Said branch of the ring arbor is embedded in the rubber so as to form the convex block and the convex block is integrated with the tyre surface.

Said ring arbor has a ring arbor body, some branches are arranged on and integrated with the outer circumference surface of the ring arbor body. The inclination direction, the inclination angle, the arrangement interval and the number of these branches are all in accordance with corresponding convex blocks and have identical lengths. The ring arbor body integrated with its branches is embedded in the rubber of the tyre. Several ring arbors are parallelly arranged and embedded in the rubber of the tyre. Each branch is respectively embedded in the corresponding convex block along the center line of said convex block.

Because said convex blocks direct against the rotation direction of the tyre, i.e. incline towards the opposite direction of the linear velocity direction of the tyre surface where said convex block is situated, i.e. the convex blocks contacted with the road surface incline towards the moving direction of the vehicle, the convex blocks contacted with the road surface would scrape the road surface while the vehicle is being braked and therefore the braking distance of the vehicle equipped with the tyre according to the invention is shorter than that of the vehicle equipped with a conventional tyre. The inclination arrangement of the convex blocks makes the deformation of the convex block greater so as to partly absorb the braking collision and the vibration produced by slight unevenness on the road surface, and therefore the comfortability of the vehicle will be improved.

It is especially noted that the vehicle equipped with the tyre according to the invention only requires less starting moment to make the vehicle start to move.

An embodiment of the tyre according to the prior art and according to the invention, respectively, is hereinafter described in detail referring to the attached drawings.
- Fig. 1: is a force-analysing diagrammatic view of the prior art tyre in a static state.
- Fig. 2: is a force-analysing diagrammatic view of the prior art tyre under the action of the starting moment during starting to move.
- Fig. 3: is a force-analysing diagrammatic view of the tyre of the present invention under the action of the starting moment during starting to move, indicating that the reacting forces produced by the elastic rehabilitating force of the convex block on the back portion of the contact area between the tyre and the road surface does not direct towards the center of the wheel.
- Fig. 4: is a side view of the tyre of the present invention, wherein the convex blocks on the tyre surface are exaggeratively drawn.
- Fig. 5: is a developed plan view of the tyre surface of the tyre of the present invention, indicating that the convex blocks are uniformly and separately arranged.
- Fig. 6: is a part section view of the tyre of the present invention.

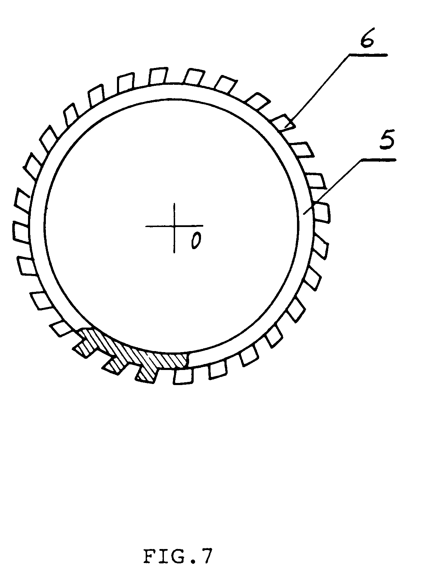

- Fig. 7: is a side view of the ring arbor.

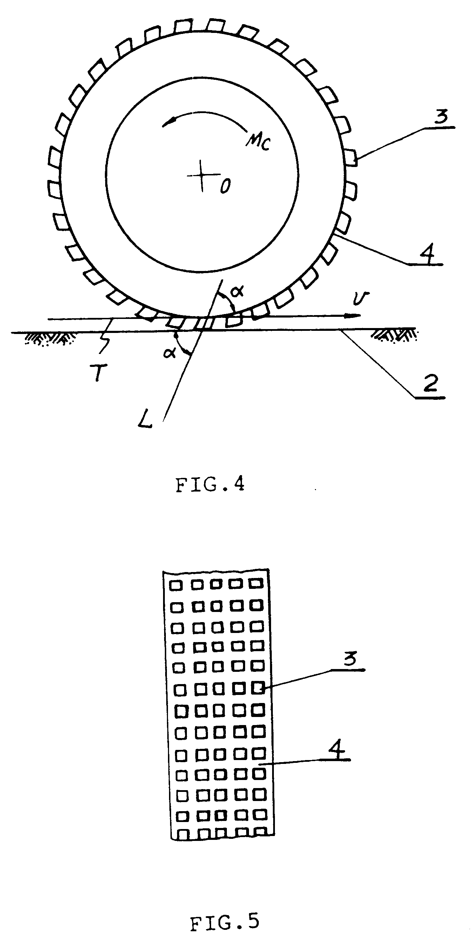

Referring to Fig. 4 and Fig. 5, some convex blocks 3 are uniformly distributed on and integrated with the circumference surface of a tyre of the type 4.50-12, i.e. the width of the tyre surface is 4.50 inch and the diameter of the hub is 12 inch. The cross section of said convex block 3 is a rectangle, and its vertical section is basically a rectangle, but on its top, on the back portion related to the moving direction of the wheel there is a triangle flange, i.e. there is a flange, which section shape is a triangle on the back portion related to the moving direction of the wheel. Said flange can prevent the wheel from sliding. The length of the convex block is 10 mm. There are five rows of convex blocks uniformly arranged on the circumference surface of the tyre, said convex block directs against the rotation direction of the tyre, i.e. inclines towards the opposite direction of the linear velocity direction V of the tyre surface 4 of the tyre where said convex block 3 is situated. The angle a between the center line L of the convex block 3 and the tangent line T of the tyre surface 4 where the convex block 3 is situated is 30° to 80°.

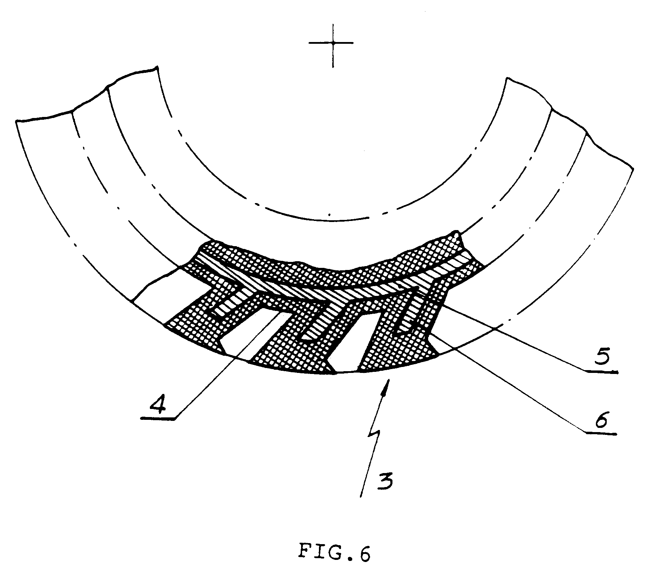

In said tyre some ring arbors may be embedded as shown in Fig. 6. Said ring arbor has a ring arbor body 5, and a number of inclined branches 6 that are arranged on and integrated with the circumference surface of said ring arbor body 5. The number, arrangement, inclination angle and inclination direction of said inclined branches 6 are all in accordance with those of corresponding convex blocks 3. There are five ring arbors parallelly arranged and embedded in the rubber of the tyre. Each branch is also embedded in the rubber so as to form said convex block 3 on the tyre surface. The ring arbor can be made of metal.

The tyre can be a solid tyre without tyre tube.

As the inclination direction of said convex block 3 directs against the rotation direction of the wheel, the reacting force S', as shown in Fig. 3, of the road surface to the convex block 3 on the back portion of the contact area formed by means of the elastic rehabilitating force of said convex block 3 is along the center line L (Fig. 4) of said convex block 3, so the reacting force S' resulted from the elastic force does not direct towards the center O of the tyre, and therefore the moment produced by the reacting force S' contributes to the rotation of the tyre, so the tyre can reduce the starting moment, and contributes to the rolling of the wheel. On the other hand, when the vehicle vibrates up and down, the pressure of the tyre to the road surface while the vehicle is falling may result in the deformation of said elastic support block, and the elastic rehabilitating force of said elastic support block acted on the road surface also contributes to the rotation of the wheel, and partly transforms the vibration energy of the wheel of the vehicle into the moving power of the vehicle.

## Claims

1. A tyre comprising elastic convex blocks (3), which are uniformly arranged on and integrated with the outer surface of the tyre, wherein each convex block (3) is inclined towards the opposite direction of the linear velocity direction (V) of the tyre surface where the convex block (3) is situated with an acute angle (α) between the center line (L) of the convex block (3) and the linear velocity direction where the convex block (3) is situated such that each convex block (3) is directed against the rotation direction of the tyre,
characterized by several parallel arranged elastically deformable ring arbors, each ring arbor comprising a ring arbor body (5) and branches (6) which are arranged on and integrated with the outer circumference surface of the ring arbor body (5) and which have an inclination direction, an inclination angle, an arrangement interval and a number that corresponds to that of the convex blocks (3), wherein the ring arbor body (5) and their branches (6) are embedded in the tyre such that each branch (6) is embedded in a convex block (3) along the center line (L) thereof.

2. A tyre according to claim 1, wherein the cross section of said convex block (3) on the tyre surface of said tyre is a rectangle, and its vertical section is basically a rectangle, but on the top of said rectangle convex block (3), on the back portion of the tyre related to the moving direction of the wheel there is a triangle flange.

3. A tyre according to claim 1 or 2, wherein each ring arbor is made of elastic metal or non-metal.

4. A tyre according to one of the claims 1 to 3, wherein said tyre is a solid tyre without tyre tube.

## Patentansprüche

1. Reifen mit elastischen Konvexblöcken (3), welche gleichförmig auf der Außenfläche des Reifens angeordnet sind und mit dieser ein Stück bilden, wobei jeder Konvexblock (3) in die zu der linearen Geschwindigkeitsrichtung (V) der Reifenoberfläche, wo sich der Konvexblock (3) befindet, entgegengesetzte Richtung mit einem spitzen Winkel (α) zwischen der Mittellinie (L) des Konvexblocks (3) und der linearen Geschwindigkeitsrichtung, wo sich der Konvexblock (3) befindet, so geneigt ist, daß jeder Konvexblock (3) gegen die Drehrichtung des Reifens gerichtet ist,
gekennzeichnet durch mehrere parallel angeordnete elastisch verformbare Ringwellen, wobei jede Ringwelle einen Ringwellenkörper (5) und Abschnitte (6) aufweist, welche auf der äußeren Umfangsoberfläche des Ringwellenkörpers (5) angeordnet sind und mit dieser ein Stück bilden und welche eine Neigungsrichtung, einen Neigungswinkel, einen Anordnungsabstand und eine Anzahl haben, die der der Konvexblöcke (3) entspricht, wobei der Ringwellenkörper (5) und seine Abschnitte (6) in den Reifen so eingebettet sind, daß jeder Abschnitt (6) in einen Konvexblock (3) entlang dessen Mittellinie (L) eingebettet ist.

2. Reifen nach Anspruch 1, bei welchem der Querschnitt des Konvexblocks (3) auf der Reifenoberfläche des Reifens ein Rechteck ist und dessen Vertikalschnitt im wesentlichen ein Rechteck ist, wobei aber am oberen Ende des rechteckigen Konvexblocks (3) auf dem bezogen auf die Laufrichtung des Rades hinteren Abschnitt des Reifens ein dreieckiger Flansch ausgebildet ist.

3. Reifen nach Anspruch 1 oder 2, bei welchem jede Ringwelle aus elastischem Metall oder Nichtmetall hergestellt ist.

4. Reifen nach einem der Ansprüche 1 bis 3, bei welchem der Reifen ein schlauchloser massiver Reifen ist.

## Revendications

1. Bandage comprenant des blocs convexes élastiques (3), qui sont uniformément répartis sur et intégrés à la surface extérieure du bandage, où chaque bloc convexe (3) est incliné dans la direction opposée à la direction de vitesse linéaire (v) de la surface de bandage où le bloc convexe (3) est situé, avec un angle aigu (α) entre la ligne centrale (L) du bloc convexe (3) et la direction de vitesse linéaire, les blocs convexes (3) étant situés de telle sorte que chaque bloc convexe (3) soit dirigé en sens inverse du sens de rotation du bandage, caractérisé par plusieurs structures arborescentes annulaires, élastiquement déformables, disposées parallèlement, chaque structure arborescente comprenant un tronc d'arbre annulaire (5) et des branches (6) qui sont réparties sur et intégrées à la surface circonférencielle extérieure du tronc d'arbre annulaire (5) et qui ont une direction d'inclinaison, un angle d'inclinaison, un intervalle de répartition et un nombre qui correspondent à ceux des blocs convexes (3), le tronc d'arbre annulaire (5) et ses branches (6) étant noyées dans le bandage de telle sorte que chaque branche (6) soit noyée dans un bloc convexe (3) le long de sa ligne centrale (L).

2. Bandage selon la revendication 1, dans lequel la section droite dudit bloc convexe (3) sur la surface de roulement dudit bandage est un rectangle et sa section verticale est en principe un rectangle mais, sur le haut dudit bloc convexe rectangulaire (3), il est prévu un rebord triangulaire sur la partie arrière du bandage par rapport à la direction d'avancement de la roue.

3. Bandage selon la revendication 1 ou 2, dans lequel chaque structure arborescente annulaire est formée d'un métal ou non-métal élastique.

4. Bandage selon une des revendications 1 à 3, dans lequel ledit bandage est un bandage plein sans chambre à air.
